# FASCICULE DE BREVET EUROPEEN

(11) **EP 1 547 865 B1**
(45) Date de publication et mention de la délivrance du brevet: **24.01.2007**
(21) Numéro de dépôt: 04292894.5
(22) Date de dépôt: 06.12.2004
(51) Int. Cl.: B60Q 1/32, F21S 8/10, F21V 8/00

(54) **Dispositif de signalisation ou d'éclairage, en particulier pour véhicule automobile**
Signal- oder Beleuchtungseinrichtung, insbesondere für Kraftfahrzeuge
Signalling or lighting device, in particular for motor vehicle

(30) Priorité: 19.12.2003 FR 0315115
(43) Date de publication de la demande: 29.06.2005
(73) Titulaire: VALEO VISION, 93012 Bobigny Cédex (FR)
(72) Inventeur: Gasquet, Jean-Claude, 89100 Saint Clement (FR)

(56) Documents cités:
- WO-A-82/00272
- WO-A-99/09349
- DE-A- 19 857 561
- US-A- 4 947 293
- US-A1- 2003 026 106
- US-B1- 6 565 244

## Description

L'invention est relative à un dispositif de signalisation ou d'éclairage, en particulier pour véhicule automobile, du genre de ceux qui comprennent au moins une source lumineuse admettant une direction principale d'émission, et au moins un guide de lumière allongé dont une extrémité est éclairée par la source, ce guide étant propre à diffuser la lumière transversalement à sa longueur.

EP-A-0 515 921 montre un dispositif de ce type prévu pour assurer un éclairage à l'intérieur du véhicule en étant incorporé dans une poignée de porte. L'intensité lumineuse suivant une direction orthogonale à la longueur du guide de lumière ne présente pas de zone privilégiée et demeure relativement faible.

Or il est souhaitable qu'un dispositif de signalisation ou d'éclairage, généralement orienté vers l'extérieur d'un véhicule, permette de bien attirer l'attention des autres automobilistes ou des piétons.

On connaît du document WO 99/09349 un dispositif d'éclairage ou de signalisation, dans lequel le guide de lumière, au moins au voisinage de la source, présente un axe longitudinal disposé transversalement à la direction principale d'émission de sorte qu'une partie du flux lumineux de la source assure, indépendamment du guide, une première fonction de signalisation ou d'éclairage à intensité lumineuse relativement élevée, et qu'une deuxième fonction de signalisation ou d'éclairage linéaire, d'intensité lumineuse moindre, est assurée suivant la longueur du guide de lumière.

L'invention a pour but, surtout, de fournir un dispositif de signalisation ou d'éclairage du genre défini précédemment qui permette de mieux exploiter la lumière émise par la source et de fournir au moins une zone à forte intensité lumineuse combinée avec au moins une zone du guide de lumière éclairant avec une intensité moindre.

L'invention a également pour but de fournir un dispositif de signalisation ou d'éclairage qui, tout en étant simple et robuste, permet de bien baliser des zones d'un véhicule.

Selon l'invention, le dispositif d'éclairage ou de signalisation comporte un système optique associé à la source lumineuse pour concentrer l'émission suivant la direction principale, comprenant une bonnette en matériau transparent et présentant des facettes orientées suivant des angles appropriés pour assurer des réflexions internes de la lumière avant sa sortie et remplir une fonction cible.

La première fonction de signalisation ou d'éclairage, assurée directement par la source, est ainsi renforcée. Un tel système optique est aussi appelé moteur de lumière ».

En général, la source lumineuse peut émettre également suivant des directions obliques, et la source assure la première fonction de signalisation ou d'éclairage suivant la direction principale d'émission, tandis que la deuxième fonction de signalisation ou d'éclairage linéaire est assurée suivant la longueur du guide de lumière par l'émission dans les directions obliques.

De préférence, la source lumineuse comprend au moins une diode électroluminescente qui éclaire sensiblement sur une demi-sphère, et le guide de lumière, au moins au voisinage de la source, a son axe longitudinal orthogonal à la direction principale d'émission.

Plusieurs guides de lumière peuvent être associés à une même source en étant répartis angulairement autour de la direction principale d'émission.

Les guides de lumière peuvent être rectilignes ou curvilignes.

La source de lumière peut être placée dans une position centrale entre au moins deux guides de lumière, notamment symétriques par rapport à la source, en particulier alignés.

Le dispositif peut comporter plusieurs sources de lumière reliées par des guides de lumière à diffusion transversale.

Un guide de lumière peut comporter au moins une zone neutre n'assurant pas de diffusion transversale de la lumière.

Le dispositif peut comporter une lentille convergente ayant une face convexe appliquée contre la source et orientée pour créer le faisceau principal.

Une lentille convergente peut être prévue à l'extrémité de chaque guide voisine de la source pour collimater les rayons lumineux dans le guide.

Les guides d'onde situés de part et d'autre de la source peuvent former une seule pièce comportant un logement pour la source de lumière, les faces du logement correspondant à l'extrémité des guides d'onde étant convexes pour concentrer les rayons lumineux dans les guides.

La diffusion de la lumière par le guide est assurée par une face située à l'arrière par rapport à l'émission. Cette face comporte des stries, ou des micro-motifs optiques, et est de préférence métallisée pour mieux renvoyer la lumière.

La largeur de la bande diffusante peut être déterminée pour élargir le champ de luminance apparente selon un angle de ± 10° par exemple.

En variante, la source comporte plusieurs sources élémentaires réparties en au moins deux sous-ensembles,l'un de ces sous ensembles étant associé à un système optique pour assurer une fonction principale de signalisation ou d'éclairage, un autre sous-ensemble coopérant avec au moins un guide de lumière pour assurer une fonction secondaire de grande longueur.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs.

Sur ces dessins :
Fig. 1 montre partiellement un dispositif selon l'invention en coupe suivant un plan passant par l'axe longitudinal des guides de lumière situés de part et d'autre de la source lumineuse ;
Fig. 2 est une coupe suivant la ligne II-II de Fig. 1 ;
Fig. 3 montre partiellement en perspective à plus grande échelle, vue de l'arrière, une extrémité du guide de lumière ;
Fig. 4 est une vue en perspective arrachée, de l'avant, de la source lumineuse avec une bonnette optique pour concentrer la lumière, et le début d'un guide de lumière ;
Fig. 5 est une vue en perspective de l'arrière par rapport à Fig. 4 ;
Fig. 6 est une vue d'ensemble de guides de lumière et d'un système optique central tel que décrit précédemment, à plus petite échelle ;
Fig. 7 est une section transversale du guide de lumière avec illustration du trajet de rayons lumineux ;
Fig. 8 à Fig. 11 montrent des variantes de réalisation possibles avec guides de lumière rectilignes ou curvilignes ;
Fig. 12 illustre un dispositif avec trois guides de lumière alignés, deux sources lumineuses entre deux guides, et deux sources extrêmes ;
Fig. 13 montre un dispositif avec guide de lumière muni à chaque extrémité d'une source lumineuse et comportant des zones neutres non illuminées ;
Fig. 14 est une section longitudinale partielle d'une pièce formant deux guides de lumière de part et d'autre d'un logement destiné à recevoir la source ;
Fig. 15 est une section suivant la ligne XV-XV de Fig. 14, à plus petite échelle et avec la source lumineuse;
Fig. 16 est une section suivant la ligne XVI-XVI de Fig. 15 ;
Fig. 17 est une vue en perspective, de l'arrière, d'une variante de Fig.14 avec une source lumineuse introduite dans le logement ;
Fig. 18 est une vue en perspective de l'avant par rapport à Fig. 17, et
Fig. 19 est un schéma d'une variante de réalisation avec une source comportant plusieurs leds.

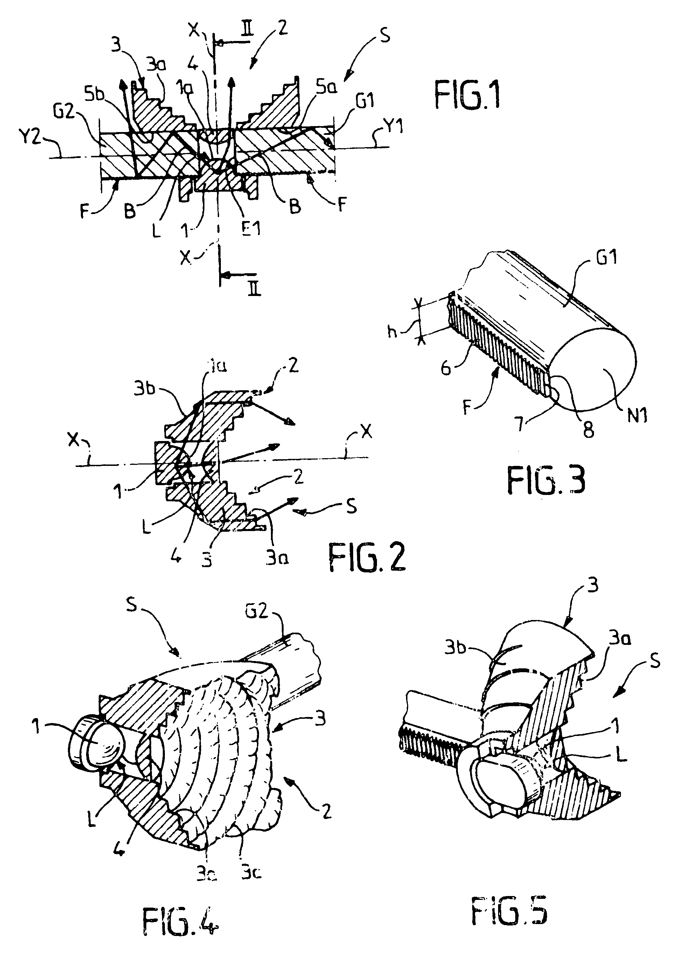

En se reportant aux Figs. 1 à 6 des dessins, on peut voir un dispositif de signalisation S pour véhicule automobile prévu pour assurer une fonction "stop surélevé" également désignée par fonction CHMLS (Central High Mounted Lamp Stop). Bien entendu, le dispositif de signalisation ou d'éclairage selon l'invention n'est pas limité à ce type de fonction.

Le dispositif comporte une source lumineuse L constituée par une diode électroluminescente 1 propre à émettre, vers le haut selon Fig.1, suivant une direction principale X-X et suivant des directions B obliques par rapport à la direction principale X-X.

Un guide de lumière G1 allongé est disposé avec son axe longitudinal Y1 orienté transversalement, au moins au voisinage de la diode 1. De préférence l'axe Y1 est orthogonal à la direction principale d'émission X-X. Le guide de lumière G1 peut être constitué par une fibre optique, par exemple cylindrique à section droite circulaire comme illustré sur Fig. 3. La section droite pourrait être différente d'un cercle. La face d'extrémité E1 du guide G1 voisine de la source L est orthogonale à l'axe Y1.

Une direction B est considérée comme oblique lorsqu'elle est inclinée par rapport à la direction X-X d'un angle suffisant pour entrer dans le guide G1 par la face E1. Cet angle peut être de l'ordre de 30°.

La surface extérieure 1a de la zone émettrice de la diode 1 est sensiblement hémisphérique. La face E1 est tangente à la surface 1a, parallèlement à la direction X-X. Le guide G1 s'étend du côté opposé à la diode 1 sur une longueur relativement importante, notamment supérieure à 500 mm, le diamètre du guide G1 étant de l'ordre de 8 mm.

Un deuxième guide de lumière G2 est avantageusement prévu dans l'alignement de G1, symétriquement par rapport à X-X. L'axe longitudinal Y2 du guide G2 est dans l'alignement de Y1.

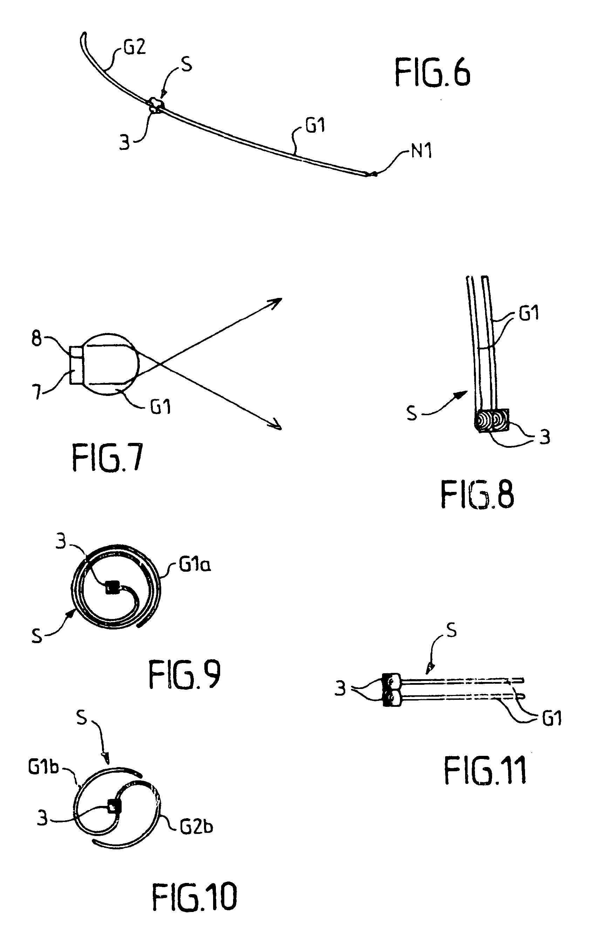

Un système optique 2 est associé à la source lumineuse L pour concentrer l'émission suivant la direction X-X. Le système optique 2 comprend une bonnette 3 en matière transparente, par exemple en matière plastique. Cette bonnette 3 forme une coupelle dont la concavité est tournée du côté opposé à la diode 1. La section transversale de la surface concave de la bonnette est formée par des gradins 3a à angles droits prévus pour assurer une concentration des rayons lumineux comme illustré sur Fig. 2 vers l'axe X-X. La surface arrière 3b de la bonnette est sensiblement tronconique et inclinée sous un angle favorisant les réflexions internes. Des pavés 3c formant lentilles (voir Fig. 4) peuvent être prévus sur les zones annulaires des gradins 3a situées dans des plans orthogonaux à la direction X-X. Les pavés 3c à surface convexe vers l'avant sont prévus pour accentuer le phénomène de concentration des rayons lumineux. La partie centrale de la zone concave de la bonnette forme une lentille semi-convexe 4 dont la face convexe est tournée vers la led 1.

La bonnette 3 comporte deux logements cylindriques diamétralement opposés 5a, 5b d'axe orthogonal à la direction X-X et propres à recevoir, de manière ajustée, l'extrémité des guides G1, G2.

La surface F des guides G1, G2 située à l'opposé de la sortie de lumière suivant la direction X-X est traitée pour renvoyer la lumière transversalement aux axes Y1, Y2 des guides, du même côté que l'émission principale suivant la direction X-X.

La surface traitée F peut comporter des stries ou des dents de scie 6 formant des prismes de Fresnel à section triangulaire d'arête orthogonale aux axes Y1, Y2 et à la direction X-X. Les prismes ainsi formés peuvent constituer la face arrière d'une lame 7 (Fig.3) intégrée aux guides tubulaires G1, G2 lors de la fabrication réalisée par injection de matière plastique transparente dans un moule.

La face 8 est réglée selon une direction parallèle à l'axe Y1, Y2 tout en restant orthogonale à la direction X-X.

La surface F, notamment les faces obliques des dents de scie 6, peuvent être métallisées.

Les dents de scie 6 pourraient être remplacées par des micro-motifs optiques (trous de forme adaptée dans la matière) pour améliorer l'aspect homogène du guide de lumière. Ces micro-motifs optiques sont notamment obtenus soit directement par attaque laser de la face arrière réglée 8 du guide G1, G2, soit via des motifs réalisés dans le moule lors de l'injection. Dans ce cas les dents de scie 6 et/ou la lame 7 ne seraient pas utilisés.

La largeur h (Fig.3) de la bande diffusante, c'est-à-dire la dimension de la surface F suivant une direction orthogonale au plan passant par l'axe du guide et la direction X-X, est calculée de manière à élargir le champ de luminance apparente pour un observateur. Avantageusement, pour un guide de lumière G1, G2 horizontal, l'angle du champ de luminance est de +/- 10° par rapport au plan horizontal.

Dans le cas où le système est utilisé selon une direction sensiblement verticale, cet angle du champ de luminance est choisi plus important afin d'augmenter la zone de visibilité selon un plan horizontal.

Comme illustré sur Fig.7, la forme cylindrique du guide G1, à section transversale circulaire, permet d'obtenir un agrandissement de la zone diffusante par un effet classique de loupe.

Le fonctionnement du dispositif de signalisation est le suivant.

Lorsque la led 1 est allumée, une émission principale a lieu suivant la direction X-X. L'intensité lumineuse est concentrée par la lentille 4 et par le dispositif optique constitué par la bonnette 3.

Cette fonction de signalisation est concentrée avec une intensité lumineuse relativement élevée.

Une deuxième fonction de signalisation de grande longueur, homogène, est obtenue de part et d'autre de la bonnette 3 suivant la longueur des guides G1, G2 à partir des rayons obliques tels que B qui subissent des réflexions internes dans les guides pour être renvoyés par la surface F vers l'avant, c'est-à-dire du même côté que l'émission principale.

Le dispositif de signalisation de l'invention peut ainsi être décomposé en deux sous-ensembles complémentaires :
- une partie centrale correspondant à la diode 1 et à la bonnette 3 ; cette partie a pour vocation de réaliser la fonction principale, fonction " stop surélevé " dans l'exemple considéré ; la fonction utilise les propriétés de réflexion interne de la matière de la bonnette 3. La forme présentée est adaptable selon des critères de style et de performance relative pour satisfaire la fonction ;
- deux appendices constitués par les guides de lumière G1, G2 qui permettent de réaliser une fonction de très grande longueur homogène, générant un style fluide pour souligner les formes d'un véhicule.

Bien entendu il est possible de réaliser une fonction linéaire asymétrique par rapport à la bonnette 3, permettant de s'adapter à des fonctions de signalisation classique de très grande longueur pour souligner un contour de véhicule, notamment du genre break. Il est en effet difficile, avec des moyens optiques classiques, d'installer une signalisation lumineuse dans des zones quasiment inaccessibles.

Fig.6 montre le système optique avec les deux guides G1, G2 de grande longueur s'étendant de part et d'autre de la bonnette 3.

Les guides de lumière permettent par exemple, de suivre le tour de la lunette arrière, ou de suivre une partie de la carrosserie ou du gabarit du véhicule.

Dans l'exemple considéré, deux guides diamétralement opposés sont prévus de part et d'autre de la led 1. On pourrait prévoir plus de deux guides, par exemple quatre sorties dans un même plan, les sorties étant décalées de 90° angulairement.

La longueur totale des guides de lumière peut dépasser 1300 mm. La forme du guide est adaptable en fonction du style du véhicule support. La pièce centrale formée par la bonnette 3 peut être ronde ou rectangulaire avec une grande dimension de l'ordre de 20 à 30mm selon les besoins.

Comme illustré sur Fig.14, il est avantageux de prévoir une lentille convergente M sur la face d'entrée du guide de lumière afin de collimater, c'est-à-dire de rendre essentiellement parallèle, le faisceau lumineux à l'intérieur du guide et ainsi d'augmenter la luminance vers l'extrémité N1 (Figs.3 et 6) du guide éloignée de la led 1.

Cette extrémité N1 (Fig.3) est avantageusement constituée par une face plane, orthogonale à l'axe longitudinal du guide et métallisée pour renvoyer la lumière à l'intérieur du guide G1 ou G2. Le rendement lumineux du système est ainsi amélioré.

De nombreuses dispositions peuvent être adoptées pour réaliser la fonction de signalisation.

Fig.8 montre une disposition asymétrique avec deux bonnettes 3 et deux sources correspondantes juxtaposées, un seul guide de lumière G1 étant associé à chaque bonnette. Les deux guides de lumière G1 sont parallèles, sensiblement verticaux et rectilignes, et disposés du même côté des bonnettes 3.

Fig.9 montre une disposition avec bonnette 3 et source de lumière au centre et un guide de lumière G1a partant de cette bonnette et s'enroulant sensiblement suivant une spirale circulaire à deux tours situés dans un plan.

Fig.10 montre un dispositif de signalisation comportant au centre la bonnette 3 avec la source de lumière. Deux guides de lumière diamétralement opposés G1b, G2b partent de cette bonnette et s'enroulent sensiblement sur un demi-tour en sens inverse, dans un même plan, de sorte que l'ensemble du motif a la forme d'un S.

En variante, les courbes formées par les guides de lumière peuvent être des courbes gauches, non situées dans un plan.

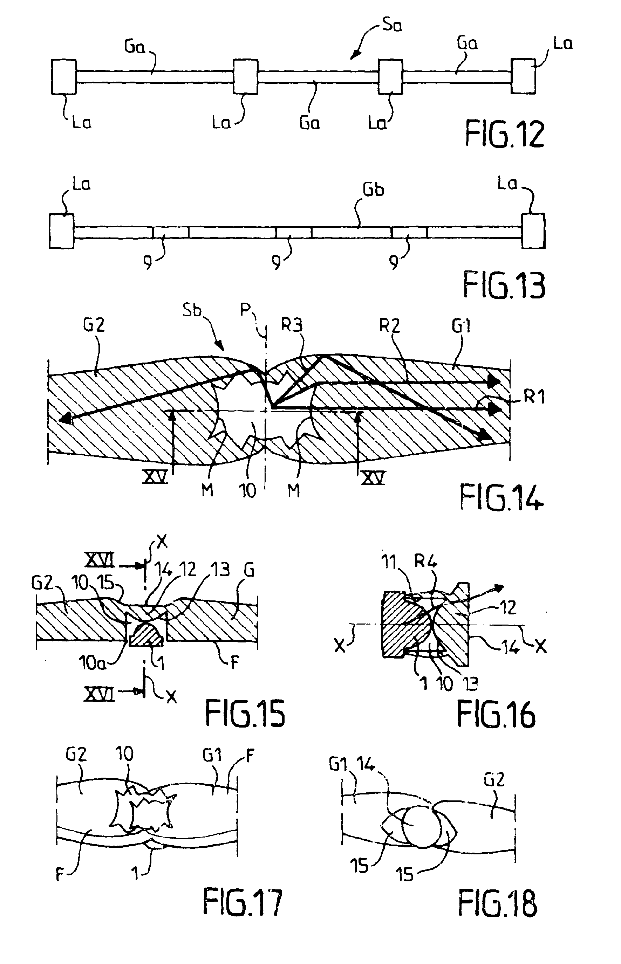

Fig.11 montre une variante de réalisation de Fig.8, avec les deux guides G1 parallèles horizontaux, et situés d'un même côté.

On peut réaliser de nombreuses fonctions, en particulier : stop ; lanterne ; indicateur de direction ; recul ou autre. La couleur de la led 1 sera choisie en conséquence.

Il est également possible, de créer des concepts différents toujours composés d'un système central optique avec source de lumière, notamment led 1, et au moins un guide de lumière complémentaire pour augmenter de manière conséquente les possibilités de style.

Il est possible de combiner ces composants pour réaliser des styles adaptables. Les versions symétriques sont obtenues en disposant une source principale de lumière au centre du système, ou à chacune de ses extrémités. Les versions asymétriques peuvent être isolées, ou regroupées en plusieurs exemplaires (deux ou plus assemblées comme illustré sur Fig.8 et 11) pour augmenter les performances optiques afin de pouvoir réaliser les fonctions les plus exigeantes en flux lumineux.

Les versions peuvent être linéaires (Fig.8 et 11) ou circulaires (Fig.9) ou plus ou moins courbes (Fig.10), ce qui permet une adaptation aux contraintes demandées par le style ou par la forme.

Fig.12 montre un dispositif de signalisation Sa linéaire utilisant quatre sources principales La de moyenne puissance, espacées, reliées par des guides de lumière diffusants Ga. Les distances entre les sources La peuvent être différentes.

Bien entendu, d'autres dispositions sont possibles, avec un nombre de sources La différent, notamment avec seulement deux sources, une à chaque extrémité du guide de lumière.

Selon Fig.13, le dispositif de signalisation comporte seulement deux sources de lumière La, une à chaque extrémité du guide Gb. Ce guide Gb comporte des zones neutres 9 espacées, dans lesquelles la diffusion de lumière vers l'extérieur a été supprimée, de sorte que ces zones 9 apparaissent comme n'étant pas illuminées. On peut ainsi obtenir un dispositif de signalisation de type " pointilliste " par opposition à une ligne lumineuse continue.

Fig.14 illustre une réalisation monobloc du dispositif de signalisation Sb selon laquelle les deux guides de lumière opposés G1, G2 forment une seule pièce dont la zone de jonction admet un plan de symétrie P orthogonal à l'axe longitudinal des guides de lumière. La section du contour de la zone de jonction par le plan de Fig.14 a la forme d'un V largement ouvert dont les branches tournent leur convexité vers l'extérieur. Ces branches s'incurvent ensuite pour rejoindre la partie cylindrique du guide de plus petit diamètre que la zone de jonction.

Un logement 10 est prévu pour la led 1 dans la zone de jonction. Ce logement 10 débouche vers l'arrière par une ouverture 10a (Fig.15) permettant d'insérer la led 1. La surface intérieure de ce logement comporte des zones telles que 11 (Fig.16) permettant de maintenir et de centrer la led 1, en épousant le contour de cette led.

Les faces d'entrée de la lumière dans les guides G1, G2 sont constituées par les lentilles convexes M servant à collimater le faisceau lumineux dans chaque guide, comme schématisé avec deux rayons R1, R2 qui divergent dans le logement 10 avant de tomber sur la face convexe de la lentille M, et qui deviennent sensiblement parallèles dans le guide.

Un rayon tel que R3 entre dans le guide de lumière au-delà du contour de la lentille M, subit des réflexions internes dans le guide, et est renvoyé vers l'avant.

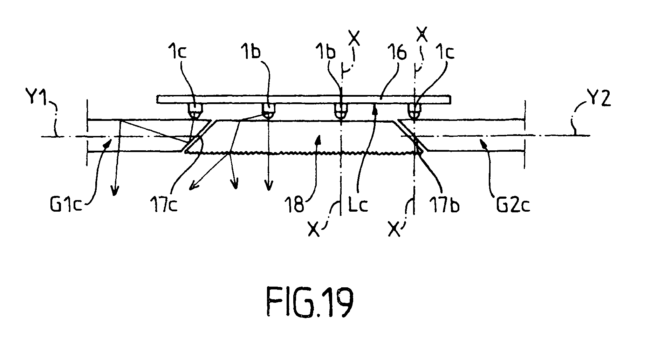

Le logement 10 est fermé, à l'avant, par une lentille semi-convexe 12 tournant sa surface convexe 13 vers l'intérieur du logement 9 et présentant une face plane 14 vers l'extérieur. La demi-sphère de la led 1 est proche par son sommet du sommet de la face 13. Les guides G1, G2 sont découpés suivant des facettes obliques 15 (Fig.18) de part et d'autre de la face plane 14 de la lentille, par des plans inclinés sur la direction X-X et orthogonaux au plan de Fig.15.

Fig.16 illustre le trajet d'un rayon lumineux R4 issu de la led 1 qui, après traversée de la lentille 14, est davantage incliné par rapport à la direction X-X.

Selon la réalisation des Fig.15 et 16, la lentille 12 est intégrée, c'est-à-dire forme une seule pièce avec les guides G1 et G2.

Selon la variante de Figs. 17 et 18, le logement 10 est ouvert vers l'avant et une lentille indépendante 12 est fixée dans l'ouverture avant du logement 10.

La partie collimatée, formée par les rayons tels que R1 et R2 permet d'augmenter la luminance à l'extrémité du guide éloignée de la led 1.

Selon la version des Fig.14 à 18, le système de signalisation est plus compact, notamment dans sa zone centrale. La forme intérieure et extérieure des guides, dans la zone de jonction, est étudiée pour optimiser la répartition du flux entre la face apparente 14 de la lentille centrale et les guides de lumière latéraux G1, G2. On peut ainsi ajuster la luminance relative des différentes zones de cette fonction de signalisation.

L'aspect homogène des guides de lumière est amélioré par la lumière collimatée par les lentilles M.

Ce concept peut être réalisé sous forme monobloc comme illustré sur les Fig.14 à 18 ou par réunion de sous-ensembles qui permettent de simplifier les moules d'injection.

Les guides de lumière peuvent prendre des formes en trois dimensions par exemple pour suivre des surfaces gauches caractéristiques de l'habitacle intérieur.

Il est possible de réaliser la fonction lanterne au niveau du projecteur d'automobile avec des formes libres.

Il est également possible d'envisager un profil rectangulaire ou évolutif de la forme circulaire vers un rectangle en adaptant la partie arrière pour assurer un aspect allumé continument homogène grâce à des micro-stries ou des micro-optiques.

L'invention permet d'obtenir une bonne signalisation, avec un nombre de leds réduit. Le dispositif présente une grande souplesse d'adaptation permettant de remplir différentes fonctions : signalisation ou éclairage intérieur en utilisant des leds de couleur blanche.

Le dispositif proposé permet d'obtenir des effets de style pour assurer une signature d'un véhicule en utilisant les possibilités offertes par une lumière froide émise par les leds et la propriété des matières plastiques transparentes à conduire la lumière sur de grandes distances.

Le dispositif, pour sa réalisation, fait appel à des concepts de fabrication connus : injection de pièces et traitement de surface par dépose d'un film métallisé par transfert thermique, attaque superficielle au laser.

La qualité perçue de la lumière émise est plus vive que celle obtenue avec un tube au néon, car les leds émettent une lumière monochromatique non modifiée par le guide optique.

Une variante des dispositifs explicités ci-dessus consiste à utiliser, comme illustré sur Fig.19, une source lumineuse Lc comportant plusieurs sources élémentaires constituées par des leds 1b, 1c spécialisées. Les leds sont fixées sur un support 16 de manière que leur directions principales d'émission X-X soient parallèles.

Une ou plusieurs leds 1c, formant des sources latérales secondaires, envoient de la lumière dans un guide tubulaire d'appoint associé G1c, G2c pour augmenter la surface éclairée de la fonction. La face d'extrémité 17b, 17c du guide est inclinée, par exemple à 45°, sur l'axe du guide. La lumière émise par les leds 1c suivant la direction principale est renvoyée par la face 17b, 17c dans le guide correspondant. De préférence, on prévoit une led par guide tubulaire.

Une ou plusieurs leds 1b sont utilisées pour réaliser la fonction principale. Elles sont associées à un ou plusieurs systèmes optiques 18 spécifiques à la fonction de signalisation à réaliser (CHMLS, Stop/Lanterne ou indicateur de direction par exemple). Un système optique 18 de fonction principale peut être réalisé sous forme de lentille répartissant la lumière de manière plus ou moins identique à la bonnette 3 déjà décrite, ou via un système à réflecteur spécifique selon le style final recherché. Le système optique 18 occupe de préférence une position centrale tandis que les guides G1, G2 sont latéraux.

## Revendications

1. Dispositif de signalisation ou d'éclairage, en particulier pour véhicule automobile, comprenant au moins une source lumineuse (L,La,Lc) admettant une direction principale (X-X) d'émission et au moins un guide de lumière allongé dont une extrémité est éclairée par la source, ce guide étant propre à diffuser la lumière transversalement à sa longueur, le guide de lumière (G1,G2;G1a;G1b,G2b;Ga,Gb;G1c,G2c), au moins au voisinage de la source (L,La,Lc), présentant un axe longitudinal (Y1,Y2) disposé transversalement à la direction principale d'émission (X-X) de sorte qu'une partie du flux lumineux de la source (L,La,Lc) assure, indépendamment du guide, une première fonction de signalisation ou d'éclairage à intensité lumineuse relativement élevée, et qu'une deuxième fonction de signalisation ou d'éclairage linéaire, d'intensité lumineuse moindre, est assurée suivant la longueur du guide de lumière (G1,G2;G1a;G1b,G2b; Ga,Gb;G1c,G2c), **caractérisé en ce qu'il** comporte un système optique (2) associé à la source lumineuse (L) pour concentrer l'émission suivant la direction principale, comprenant une bonnette (3) en matériau transparent et présentant des facettes (3a) orientées suivant des angles appropriés pour assurer des réflexions internes de la lumière avant sa sortie et remplir une fonction cible.

2. Dispositif selon la revendication 1, **caractérisé en ce que** la source lumineuse (L) est propre à émettre également suivant des directions obliques (B), et que la source (L) assure la première fonction de signalisation ou d'éclairage, suivant la direction principale d'émission, tandis que la deuxième fonction de signalisation ou d'éclairage linéaire est assurée suivant la longueur du guide de lumière (G1,G2;G1a;G1b,G2b;Ga,Gb) par l'émission dans les directions obliques.

3. Dispositif selon l'une des revendications 1 ou 2, **caractérisé en ce que** la source lumineuse (L) comprend au moins une diode électroluminescente (1) qui éclaire sensiblement sur une demi-sphère, et le guide de lumière (G1,G2;G1a;G1b,G2b; Ga,Gb), au moins au voisinage de la source, a son axe longitudinal orthogonal à la direction principale d'émission.

4. Dispositif selon l'une des revendications précédentes, **caractérisé en ce que** plusieurs guides de lumière (G1,G2 ;G1b,G2b) sont associés à une même source (L,1) en étant répartis angulairement autour de la direction principale d'émission.

5. Dispositif selon l'une des revendications précédentes, **caractérisé en ce que** les guides de lumière (G1a; G1b,G2b) sont curvilignes.

6. Dispositif selon l'une des revendications précédentes, **caractérisé en ce que** la source de lumière (L, 1) est placée dans une position centrale entre au moins deux guides de lumière (G1,G2; G1a, G1b).

7. Dispositif selon l'une des revendications précédentes, **caractérisé en ce qu'**il comporte plusieurs sources de lumière (La) reliées par des guides de lumière (Ga) à diffusion transversale.

8. Dispositif selon l'une des revendications précédentes, **caractérisé en ce qu'**un guide de lumière (Gb) comporte au moins une zone neutre (9) n'assurant pas de diffusion transversale de la lumière.

9. Dispositif selon l'une des revendications précédentes, **caractérisé en ce qu'**il comporte une lentille convergente (12) orientée pour créer le faisceau principal.

10. Dispositif selon l'une des revendications précédentes, **caractérisé en ce qu'**une lentille convergente (M) est prévue à l'extrémité de chaque guide voisine de la source pour collimater les rayons lumineux dans le guide.

11. Dispositif selon l'une des revendications précédentes, **caractérisé en ce que** les guides de lumière (G1, G2) situés de part et d'autre de la source forment une seule pièce comportant un logement (10) pour la source de lumière, les faces du logement correspondant à l'extrémité des guides d'onde étant convexes pour concentrer les rayons lumineux dans les guides.

12. Dispositif selon l'une des revendications précédentes, **caractérisé en ce que** la diffusion de la lumière par le guide est assurée par une face (F) comportant des prismes, des stries, ou des micro-motifs optiques.

13. Dispositif selon la revendication 12, **caractérisé en ce que** la face (F) comportant des prismes, des stries, ou des micro-motifs optiques est métallisée pour mieux renvoyer la lumière.

14. Dispositif selon la revendication 1, **caractérisé en ce que** la source (Lc) comporte plusieurs sources élémentaires (1b, 1c) réparties en au moins deux sous-ensembles (1b,1b ;1c,1c),l'un de ces sous ensembles (1b,1b) étant associé à un système optique (1B) pour assurer une fonction principale de signalisation ou d'éclairage, un autre sous- ensemble (1c,1c) coopérant avec au moins un guide de lumière (G1c, G2c) pour assurer une fonction secondaire de grande longueur.

## Claims

1. Signalling or lighting device, in particular for a motor vehicle, comprising at least one light source (L, La, Lc) having a principal emission direction (X-X) and at least one elongate light guide, one end of which is illuminated by the source, this guide being able to diffuse the light transversely to its length, the light guide (G1, G2; G1a; G1b, G2b; Ga; Gb; G1c, G2c), at least in the vicinity of the source (L, La, Lc), having a longitudinal axis (Yl, Y2) disposed transversely to the principal emission direction (X-X) so that part of the light flux from the source (L, La, Lc) fulfils, independently of the guide, a first signalling or lighting function at a relatively high light intensity, and so that a second linear signalling or lighting function, of lesser light intensity, is provided along the length of the light guide (G1, G2; G1a; G1b, G2b; Ga, Gb; G1c, G2c), **characterised in that** it comprises an optical system (2) associated with the light source (L) in order to concentrate the emission along the principal direction, comprising a cap (3) made from transparent material and having facets (3a) oriented at suitable angles in order to provide internal reflections of the light before it emerges and to fulfil a target function.

2. Device according to claim 1, **characterised in that** the light source (L) is able to emit also in oblique directions (B) and **in that** the source (L) fulfils the first signalling or lighting function, in the principal emission direction, whilst the second linear signalling or lighting function is fulfilled along the length of the light guide (G1, G2; G1a; G1b, G2b; Ga, Gb) by the emission in oblique directions.

3. Device according to one of claims 1 or 2, **characterised in that** the light source (L) comprises at least one light emitting diode (1) that illuminates substantially over a hemisphere, and the light guide (G1, G2; G1a; G1b, G2b; Ga, Gb), at least in the vicinity of the source, has its longitudinal axis orthogonal to the principal emission direction.

4. Device according to one of the preceding claims, **characterised in that** several light guides (G1, G2; G1b, G2b) are associated with the same source (L,1) whilst being distributed angularly around the principal emission direction.

5. Device according to one of the preceding claims, **characterised in that** the light guides (G1a; G1b, G2b) are curvilinear.

6. Device according to one of the preceding claims, **characterised in that** the light source (L, 1) is placed in a central position between at least two light guides (G1, G2: G1a, G1b).

7. Device according to one of the preceding claims, **characterised in that** it comprises several light sources (La) connected by transverse-diffusion light guides (Ga).

8. Device according to one of the preceding claims, **characterised in that** a light guide (Gb) comprises at least one neutral zone (9) not providing any transverse diffusion of the light.

9. Device according to one of the preceding claims,
**characterised in that** it comprises a convergent lens (12) oriented so as to create the principal beam.

10. Device according to one of the preceding claims, **characterised in that** a convergent lens (M) is provided at the end of each guide close to the source in order to collimate the light rays in the guide.

11. Device according to one of the preceding claims, **characterised in that** the light guides (G1, G2) situated on each side of the source form a single piece comprising a housing (10) for the light source, the faces of the housing corresponding to the end of the wave guides being convex in order to concentrate the light rays in the guides.

12. Device according to one of the preceding claims, **characterised in that** the diffusion of the light by the guide is provided by a face (F) comprising prisms, serrations or optical micropatterns.

13. Device according to claim 12, **characterised in that** the face (F) comprising prisms, serrations or optical micropatterns is metallised in order to better return the light.

14. Device according to claim 1, **characterised in that** source (Lc) comprises several elementary sources (1b, 1c) distributed in at least two subassemblies (1b, 1b; 1c, 1c), one of these subassemblies (1b, 1b) being associated with an optical system (18) for fulfilling a principal signalling or lighting function, another subassembly (1c, 1c) cooperating with at least one light guide (G1c, G2c) in order to fulfil a secondary function of great length.

## Patentansprüche

1. Signal- oder Beleuchtungsvorrichtung, insbesondere für Kraftfahrzeuge, mit wenigstens einer Lichtquelle (L, La, Lc), die eine Hauptlichtabgaberichtung (X-X) ermöglicht, und wenigstens einem länglichen Lichtleiter, der an einem Ende von der Lichtquelle beleuchtet wird, wobei der Lichtleiter das Licht quer zu seiner Länge zu streuen vermag, wobei der Lichtleiter (G1, G2; G1a; G1b, G2b; Ga, Gb; G1c, G2c) wenigstens in der Nähe der Lichtquelle (L, La, Lc) eine Längsachse (Y1, Y2) aufweist, die quer zur Hauptlichtabgaberichtung (X-X) derart angeordnet ist, dass ein Teil des Lichtstroms der Lichtquelle (L, La, Lc) unabhängig von dem Lichtleiter eine erste Signalgebungs- oder Beleuchtungsfunktion mit relativ hoher Lichtstärke auszuführen vermag, und eine zweite lineare Signalgebungs- oder Beleuchtungsfunktion mit geringerer Lichtstärke entlang der Länge des Lichtleiters (G1, G2; G1a; G1b, G2b; Ga, Gb; G1c, G2c) erfolgt,
**dadurch gekennzeichnet, dass** sie ein der Lichtquelle (L) zugeordnetes optisches System (2) zum Konzentrieren der Lichtabgabe in der Hauptrichtung umfasst, das eine Vorsatzlinse 3 aus lichtdurchlässigem Material mit Facetten (3a) aufweist, die in Winkeln ausgerichtet sind, die dazu geeignet sind, interne Reflexionen des Lichts vor dessen Austritt zu gewährleisten und eine Zielfunktion zu erfüllen.

2. Vorrichtung nach Anspruch 1,
**dadurch gekennzeichnet, dass** die Lichtquelle (L) auch in schräg verlaufende Richtungen (B) Licht zu emittieren vermag, und dass die Lichtquelle (L) die erste Signalgebungs- oder Beleuchtungsfunktion in der Hauptlichtabgaberichtung auszuführen vermag, während die zweite lineare Signalgebungs- oder Beleuchtungsfunktion entlang der Länge des Lichtleiters (G1, G2; G1a; g1b, G2b, Ga, Gb) durch Lichtabgabe in die schräg verlaufenden Richtungen ausgeführt wird.

3. Vorrichtung nach einem der Ansprüche 1 oder 2,
**dadurch gekennzeichnet, dass** die Lichtquelle (L) wenigstens eine Leuchtdiode (1) umfasst, die im Wesentlichen in einer Kugelhälfte leuchtet, und der Lichtleiter (G1, G2; G1a, G1b G2b; Ga, Gb) wenigstens in der Nähe der Lichtquelle mit seiner Längsachse orthogonal zu der Hauptlichtabgaberichtung verläuft.

4. Vorrichtung nach einem der vorhergehenden Ansprüche,
**dadurch gekennzeichnet, dass** mehrere Lichtleiter (G1, G2; G1b, G2b) ein und derselben Lichtquelle (L, 1) zugeordnet sind und dabei um die Hauptlichtabgaberichtung herum winkelförmig verteilt sind.

5. Vorrichtung nach einem der vorhergehenden Ansprüche,
**dadurch gekennzeichnet, dass** die Lichtleiter (G1a, G1b, G2b) gekrümmt sind.

6. Vorrichtung nach einem der vorhergehenden Ansprüche,
**dadurch gekennzeichnet, dass** die Lichtquelle (L, 1) in einer mittigen Position zwischen wenigstens zwei Lichtleitern (G1, G2; G1a, G1b) platziert ist.

7. Vorrichtung nach einem der vorhergehenden Ansprüche,
**dadurch gekennzeichnet, dass** sie mehrere Lichtquellen (La) umfasst, die durch transversal streuende Lichtleiter (Ga) miteinander verbunden sind.

8. Vorrichtung nach einem der vorhergehenden Ansprüche,
**dadurch gekennzeichnet, dass** ein Lichtleiter (Gb) wenigstens einen neutralen Bereich (9) umfasst, in dem keine transversale Lichtstreuung erfolgt.

9. Vorrichtung nach einem der vorhergehenden Ansprüche,
**dadurch gekennzeichnet, dass** sie eine Sammellinse (12) aufweist, die zum Erzeugen des Hauptlichtbündels ausgerichtet ist.

10. Vorrichtung nach einem der vorhergehenden Ansprüche,
**dadurch gekennzeichnet, dass** eine Sammellinse (M) am Ende eines jeden Lichtleiters benachbart zur Lichtquelle vorgesehen ist, um die Lichtstrahlen in den Leiter zu kollimieren.

11. Vorrichtung nach einem der vorhergehenden Ansprüche,
**dadurch gekennzeichnet, dass** die zu beiden Seiten der Lichtquelle angeordneten Lichtleiter (G1, G2) ein einziges Stück bilden, das eine Aufnahme (10) für die Lichtquelle umfasst, wobei die dem Ende der Lichtleiter entsprechenden Seiten der Aufnahme konvex sind, um die Lichtstrahlen in die Leiter zu konzentrieren.

12. Vorrichtung nach einem der vorhergehenden Ansprüche,
**dadurch gekennzeichnet, dass** die Lichtstreuung durch den Lichtleiter durch eine Seite (F) erfolgt, die Prismen, Rippen oder optische Mikromuster aufweist.

13. Vorrichtung nach Anspruch 12,
**dadurch gekennzeichnet, dass** die Seite (F) mit den Prismen, Rippen oder optischen Mikromustern zum besseren Reflektieren des Lichts mit einer Metallschicht überzogen ist.

14. Vorrichtung nach Anspruch 1,
**dadurch gekennzeichnet, dass** die Lichtquelle (Lc) mehrere Einzellichtquellen (1b, 1c) umfasst, die wenigstens in zwei Untergruppen (1b, 1b; 1c, 1c) aufgeteilt sind, wobei eine der Untergruppen (1b, 1b) einem optischen System (18) zugeordnet ist, um eine Hauptsignalgebungs- oder -beleuchtungsfunktion auszuführen, und die andere Untergruppe (1c, 1c) mit wenigstens einem Lichtleiter (G1c, G2c) zusammenwirkt, um eine Zusatzfunktion mit großer Erstreckung auszuführen.
